(19) Europäisches Patentamt
European Patent Office
Office européen des brevets

(11) **EP 0 579 319 B1**

(12) **EUROPEAN PATENT SPECIFICATION**

(45) Date of publication and mention
of the grant of the patent:
**08.04.1998 Bulletin 1998/15**

(51) Int Cl.⁶: **H04N 7/24**, H04N 7/32

(21) Application number: **93202005.0**

(22) Date of filing: **08.07.1993**

(54) **Tracking moving objects**

Verfolgung eines sich bewegenden Objektes

Poursuite d'un objet en mouvement

(84) Designated Contracting States:
**DE FR GB**

(30) Priority: **16.07.1992 GB 9215102**

(43) Date of publication of application:
**19.01.1994 Bulletin 1994/03**

(73) Proprietors:
- **PHILIPS ELECTRONICS UK LIMITED**
  **Croydon CR9 3QR (GB)**
  Designated Contracting States:
  **GB**
- **Philips Electronics N.V.**
  **5621 BA Eindhoven (NL)**
  Designated Contracting States:
  **DE FR**

(72) Inventor: **Thanassas, Dimitrios,**
**c/o Philips Elecxtronics**
**1 Worship Street, London EC2A 2AB (GB)**

(74) Representative: **Andrews, Arthur Stanley et al**
**Philips Electronics UK Limited**
**Patents and Trade Marks Department**
**Cross Oak Lane**
**Redhill, Surrey RH1 5HA (GB)**

(56) References cited:
**EP-A- 0 330 455**     **EP-A- 0 474 304**
**EP-A- 0 474 307**     **EP-A- 0 476 603**

- **INTERNATIONAL CONFERENCE ON IMAGE
  PROCESSING AND ITS APPLICATIONS 18-20
  JULY 1989, WARWICK, GB, IEE, LONDON, GB,
  pages 531 - 535, XP000406113 J.F.S. YAU ET AL.
  'A feature tracking method for motion parameter
  estimation in a model-based coding application'**

## Description

The invention relates to a method of tracking an object in a scene represented as a series of picture frames captured by a camera for display on a display device.

The invention further relates to apparatus for tracking an object in a scene represented as a series of picture frames captured by a camera for display on a display device.

The invention has particular application in videophones where part of the scene, typically the face of a communicant, is of particular interest to the viewer. For videophones to become widely accepted they must conform rigorously to international standards to ensure compatibility between different manufacturer's equipment. This standardisation has been agreed for videophones operating over the Integrated Services Digital Network (ISDN). One such standard is H.261 developed by CCITT Study Group XV for videophone transmissions over digital networks at low bit rates (multiples of 64 kbit/s). The bandwidth reduction (or alternatively the video compression ratio) involved in achieving the lowest bit rate (64 kbit/s) is of the order of 300:1. Using current coding techniques it is not possible to achieve such a huge reduction without introducing some error into the transmitted sequence which manifests itself as a visible deterioration in the decoded image.

The basis of the H.261 coding algorithm is a hybrid of several well known techniques and it can be described as a hybrid motion-compensated DPCM/DCT coder, where DPCM is differential pulse code modulation and DCT is the discrete cosine transform. The subjective quality of the images produced by the above algorithm is dependent upon both the complexity of the image and on the extent and type of motion in the image. People using videophones cannot have their movement unduly constrained and in a typical office environment there may be considerable movement in the background. Consequently the problem of picture degradation due to motion over a considerable portion of the image has to be considered.

In typical videophone communications the people using the videophones are talking to each other, and looking at each other's faces, and are not particularly interested in what the background looks like. Consequently a strategy has been proposed in which the available bits are allocated in such a manner that the subjectively important parts of the image, for example a face, receive more of the available bit rate at the expense of the less important parts. Thus, if in each picture frame the location of the user's face is known, or detected, the quantisation step used in the facial area can be decreased so that more bits will be used in this area. The background will as a result receive fewer bits and thus become further degraded but as it is not the centre of attention the overall subjective quality of the received picture as perceived by the viewer is improved. There is a provision within the H.261 standard for this weighting of the bit allocation to different parts of the image.

As a result the problem of locating and tracking a face in a sequence of picture frames has been addressed in order to be able to apply the weighting of bit allocation to improve the picture quality in videophone communications.

One method of tracking a face is disclosed in a paper by J.F.S. Yau and N.D. Duffy entitled "A Feature Tracking Method for Motion Parameter Estimation In A Model-Based Coding Application" presented at the Third International Conference on Image Processing and its Applications held at Warwick on 18-20th July 1989 and published in IEE Conference Publication No. 307 at pages 531 to 535.

This paper presents

"a method by which the dynamics of facial movement may be parameterised for application in a model-based image coding scheme. A tracking algorithm is described whereby the boxes of the eyes, nose and mouth of the subject are initially located and then tracked over subsequent frames using both block matching and code-book search techniques. The six degrees of freedom required to define the position and orientation of the head are derived from the tracked box positions by means of a motion parameter estimation algorithm. Implementation of the algorithm involves interpreting the spatial distribution of the box positions and relating them to a simplified topological three-dimensional model of the face.

The estimation of the position and orientation for each frame of the analysed image sequence is performed in two phases. The first phase involves tracking the eyes, nose and mouth over the image sequence. This was achieved by locating the facial features within the first frame and then tracking them over subsequent frames using block searching and code-book techniques. The initial feature location was performed manually, but all processing thereafter was performed by software algorithms. Feature locations were represented by boxes which fully enclosed the facial features concerned. The result of the first phase, the tracking phase, of the image sequence analysis is therefore a description of the trajectory of the facial feature boxes over the image sequence along the temporal axis. The second phase, termed the motion parameter estimation phase, interprets the spatial distribution of the facial feature boxes for each frame to provide an estimate of position and orientation. The task of recovering 3-D information from 2-D data was achieved by referring the facial feature box positions to a simplified topological model of the face.

The derivation of 3-D information from image sequence analysis for the picture-phone application does not demand as much accuracy and precision as in applications such as robot vision. The latter demands precise and absolute measurements of angles and distances. In the case of facial images it suffices to approximate the position and orientation parameters. It is more important that the dynamics of the facial movement are reproduced in perfect synchronisation with the dynamics from the original image sequence. This is because it is the dynamics of facial movement rather than absolute position and orientation that convey the visual nuances of communication across the channel."

The method described by Yau and Duffy suffers from a number of disadvantages. First it is incapable of tracking a face if one of the eyes or the mouth is occluded, that is an object is passed in front of it. Secondly, it cannot track a face if the head is turned so far that one eye becomes invisible to the camera. Thirdly it requires identification of specific features of the face i.e. eyes, nose, mouth.

The invention provides a method of tracking an object in a scene represented as a sequence of picture frames captured by a camera for display on a display device, the method comprising the steps of:

a) segmenting the image in an initial frame into areas having uniform motion,
b) locating the object in the initial frame and finding its centroid and motion vector
c) projecting the centroid of the object onto the next frame using the motion vector to define a new position of the object centroid,
d) segmenting the image in the next frame into a number of areas having uniform motion,
e) finding those areas of the image similar to areas of the object in the previous frame and which together produce a centroid close to the projected centroid to produce a new object,
f) calculating the size and motion vector of the new object,
g) projecting the new position of the object centroid onto the succeeding frame using the motion vector of the new object, and
h) repeating steps d) to g).

In this method each frame is segmented into areas of uniform motion. An initial location of the object is needed which comprises a number of such areas of uniform motion and at each succeeding frame the areas belonging to the object are found and these are called the new object. The centroid of the object is tracked over the sequence of frames using the estimated motion of the object. The centroid of the new object is not used to track the object; instead the projected centroid is used to track the object. The new object areas obtained at each stage are used only to calculate the size and motion characteristics of the new object and not its location.

In step c) and step f) a forward motion vector may be calculated while backward motion vectors may be used to segment the images.

Backward motion vectors are already available in a standard H.261 codec and it would be convenient to use these motion vectors to track the object. However, these backward motion vectors, that is motion vectors used to project the current frame back into the previous frame, are designed to satisfy the inter frame coding mode of the H.261 coding algorithm. In contrast tracking requires vectors estimated looking forward from the current frame, i.e. forward motion vectors. Tracking could be approximated by reversing the sense of the backward motion vectors but this can give rise to ambiguities caused by covering and uncovering background. As a result it is preferred to calculate forward motion vectors for the tracking function while retaining the use of backward motion vectors for the segmentation.

The factors determining similarity may be the size, position, and magnitude and direction of motion of the areas to be compared.

The relative importance of these factors may be determined empirically and in a currently preferred embodiment the similarity measure is determined by the formula:

$$similarity = (mmd + mad + 12 \times cd + 2 \times sd)/8$$

where

mmd is the motion magnitude difference,
mad is the motion angle difference,
cd is the centroid difference, and
sd is the size difference.

The object may be a human head and the method may further include the step of constructing a rectangle around the head. This rectangle may be used in an H. 261 videophone codec to drive the quantiser to enable the user's face to be transmitted at a higher resolution than the rest of the picture.

The segmenting steps may comprise the steps of

i) comparing motion vectors of two adjacent blocks of pixels,
ii) assigning the blocks of pixels to the same area if the difference between their motion vectors is within a given threshold,
iii) repeating steps i) and ii) for each block of pixels adjacent to a block of pixels within the area until all adjacent blocks of pixels have been examined and no further blocks of pixels are incorporated into the area,
iv) selecting two further adjacent blocks which are not included within the area and repeating steps i) to iii) to create a further area of uniform motion, and
v) repeating step iv) until all blocks within the picture frame are allocated to an area.

This method of segmenting the picture has the advantage that a given object is more likely to result in a single segmented area. For example although a bar rotated around one of its ends will have significantly different motion at each end it will be segmented into a single area as the difference in motion vectors between adjacent blocks will be small. The average motion vector of an area is not used for comparison with the potential block; instead the motion vector of the adjacent block is used.

The invention further provides apparatus for tracking an object in a scene represented as a sequence of picture frames captured by a camera for display on a display device, the apparatus comprising means for segmenting the image in an initial frame into areas having uniform motion, means for locating the object in the initial frame and finding its centroid and motion vector, means for projecting the centroid of the object onto the next frame using the motion vector to define a new position of the object centroid, means for segmenting the image in the next frame into a number of areas having uniform motion, means for finding those areas of the image similar to areas of the previous frame and having a centroid close to the projected centroid to produce a new object, means for calculating the size and motion vector of the new object, and means for projecting the new position of the object centroid onto the succeeding frame using the motion vector of the new object.

The segmenting means may use the backward motion vectors of the pixel blocks, while the projecting means may use the forward motion vector of the object.

The similarity of areas may be determined by taking into account the relative size, position, and magnitude and direction of motion of the areas being compared.

The object may be a human head and means may be provided for constructing a rectangle around the head.

The segmenting means may comprise means for comparing motion vectors of two adjacent blocks of pixels, means for assigning the blocks of pixels to the same area if the difference between their motion vectors is less than a given threshold, means for recursively considering all blocks of pixels adjacent to blocks of pixels within the same area until all adjacent blocks of pixels have been examined and no further blocks have been incorporated into the area.

The invention still further provides a videophone terminal comprising a camera, a display unit and a codec wherein the codec is arranged to transmit picture information over a communication link of a given bandwidth and includes means for quantising different areas of each picture frame at a different resolution wherein object tracking apparatus according to the invention is arranged to control the codec such that the area of the picture frame containing the tracked object is transmitted at a higher resolution than the rest of the picture frame.

The above and other features and advantages of the invention will become apparent from the following embodiments of the invention which are described, by way of example, with reference to the accompanying drawings, in which:-

Figure 1 is a block schematic diagram of the encoding section of a codec constructed to meet the H. 261 specification of the CCITT incorporating an object tracking arrangement according to the invention;
Figure 2a shows a picture frame with motion vectors superimposed thereon;
Figure 2b is a histogram of blocks of motion vectors shown in Figure 2a,
Figure 3 shows the picture frame of Figure 2 with segmented regions of uniform motion;
Figure 4 is a flow diagram illustrating a method of tracking an object according to the invention, and
Figure 5 is a further flow diagram illustrating in more detail a method of tracking an object according to the invention.

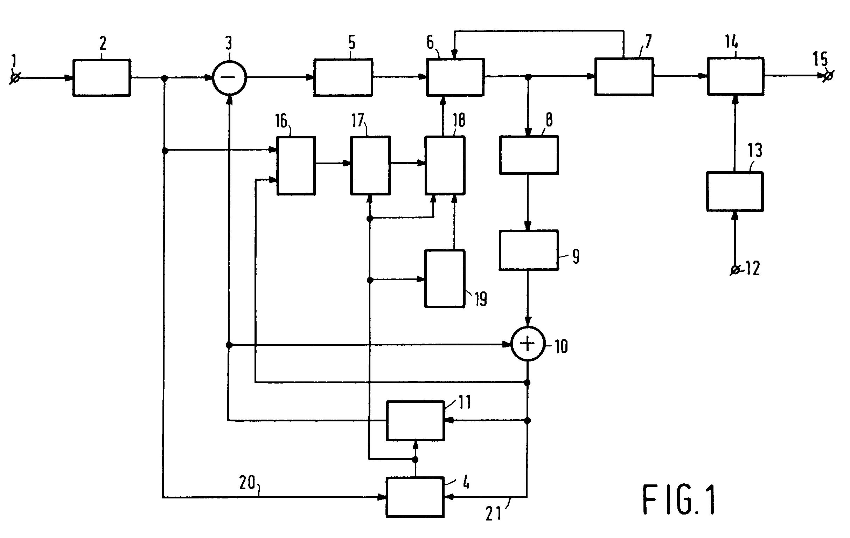

As shown in Figure 1 the encoding section of an H. 261 codec has an input 1 which is connected to a coding arrangement 2 which converts a received video signal into a common intermediate format for processing and transmission. The output of the coding arrangement 2 is fed to a first input of a subtractor 3 and to a first input of a motion estimator 4 via a line 20. The output of the subtractor 3 is fed to an arrangement 5 for forming a discrete cosine transform (DCT) which is then fed to a quantizer 6. The output of the quantizer 6 is connected to the input of a buffer circuit 7 and to the input of an inverse quantizer 8. The output of the inverse quantizer 8 is connected to the input of an arrangement 9 for performing an inverse DCT. The output of the inverse DCT arrangement 9 is connected to a first input of a summing circuit 10 whose output is fed to a frame store 11. An output from the frame store 11 is connected to a second input of the summing circuit 10 and to a second input of the subtractor 3. The output of the summing circuit 10 is fed to a second input of the motion estimator 4 via a line 21 whose output is connected to the frame store 11. A second input 12 of the codec is connected to an audio coder 13 which codes a received audio signal into an appropriate code for transmission. Outputs of the buffer circuit 7 and audio coder 13 are connected to first and second inputs respectively of a transmission multiplexer 14 whose output is connected to an output 15 of the codec and which supplies the coded signal for transmission.

As described thus far the encoding section is as known from the H.261 specification and the implementation of the various functional blocks is well known to the person skilled in the art and therefore will not be further described herein. In order to perform the invention in the context of an H.261 codec a number of additional functional blocks are provided. The output of the coding arrangement 2 is further connected to a first input of a motion detector 16 while the output of the summing circuit 10 is further connected to a second input of the motion detector 16. The output of the motion detector 16 is fed to the input of an initial head locator 17. The output of the head locator 17 is fed to a head tracker 18 whose output is connected to a further input of the quantizer 6. The output of the motion estimator 4 is fed to the input of a further motion estimator 19, to a second input of the initial head locator 17, and to a further input of the head tracker 18. The motion estimator 19 computes for the previous frame the forward motion vectors which are applied to a further input of the head tracker 18.

H.261 is an international standard, developed by CCITT Study Group XV, for videophone transmissions over digital networks at low bit rates (multiples of 64k bit/s). The basis of the H261 coding algorithm is a hybrid of several well known techniques, and it might be described as a hybrid motion-compensated DPCM/DCT coder, where DPCM is differential pulse coded modulation, and DCT is the discrete cosine transform. Figure 1 shows a block diagram for such a system. The algorithm, after initialisation, proceeds as follows. The frame store 11 contains the image which was captured during the previous frame period and the motion estimator 4 which uses block matching with 16x16 pixel blocks termed "macroblocks" finds the best match for each block in the present frame with blocks of the previous frame. The data for the present frame is presented to the motion estimator 4 on line 20 while the data for the previous frame is presented to the motion estimator 4 on line 21. The motion vectors are used to displace the image in the frame store 11 which is replicated in the decoder to form the DPCM prediction. The difference between this prediction of the current image and the actual image is calculated by subtracting the two images to give a motion compensated frame difference. This has exploited the temporal correlation within the image sequence to reduce the amount of data to be transmitted. The next stage of the algorithm seeks to exploit the intraframe, or spatial, correlation, within the motion compensated frame difference by taking its discrete cosine transform on an 8x8 pixel block basis. The coefficients of the DCT are quantised (introducing error), and also thresholded to discard the smaller coefficients in any block. The output of this stage is then Huffman coded, and fed into a buffer 7 which matches the instantaneous data rate of the encoder to the fixed rate of the transmission channel. The amount of data within the buffer 7 is monitored, and a signal is fed back to control the step size and threshold of the quantiser 6 which will determine the resolution and number of the transmitted DCT coefficients. If the step size becomes too coarse, the coder designer may choose to decrease the frame rate, giving more time to transmit the data for each frame, and to use a finer quantisation step.

Within the coder itself, the coded image is decoded and stored to generate the prediction frame for the next coding cycle. Although error has been introduced to the image due to the nature of the coding strategy, the negative feedback introduced by using the decoded image as a reference allows the error to gradually integrate out in those parts of the image for which the prediction is a good approximation to the true image, i.e. for areas which are stationary or have purely translational motion.

The subjective quality of the image produced by the above algorithm is dependent upon both the complexity of the image (and how suited this complexity is to the basis functions of the DCT) and also to the extent and type of motion in the image (i.e. block matching can handle 2-D planar motion quite well, but motion involving rotation, or motion parallel to the camera axis will reduce the correlation of the matching process resulting in a degradation of the subjective image quality). People using videophones cannot have their movement unduly constrained, and indeed there might, in a typical office environment, be quite a lot of movement in the background in any case, so the problem of the degradation of picture fidelity due to motion over a significant portion of the image is important.

In typical videophone communications the people using the phone are talking to each other and looking at each other's faces, and are not greatly interested in the appearance of the background. This suggests a strategy in which, instead of allocating the available bits evenly across the image, they are allocated in such a manner that the subjectively important parts of the image receive more of the available bit rate, at the expense of the less important parts. Thus if the location of the user's face is known, the quantisation used in the facial area can be decreased, so that more bits will be used in this area. The background will of course now receive fewer bits, and hence degrade, but as it is not the centre of attention, the overall subjective picture quality should improve. There is provision within H.261 for the weighting of the bit allocation to different parts of the image. It is proposed to use this provision by locating and tracking the head of the speaker and producing a rectangle which surrounds it. The co-ordinates of the rectangle are applied to the quantiser 6 so that it decreases the quantisation within the rectangle and thus the facial features are transmitted at an increase resolution compared with other parts of the picture.

In order to locate and track the user's head the additional functional blocks 16 to 19 are utilised. The initial head locator 16 may take any convenient form. One approach is to initially locate a head and shoulders silhouette in the manner disclosed in DE-A-4028191 (PHD 90163).

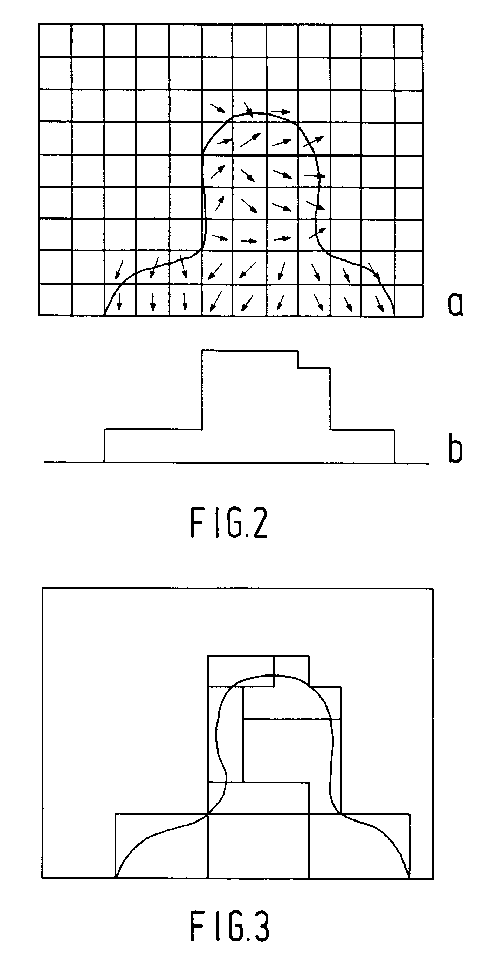

The histogram of the image flow field is computed then by counting for each successive block of 16 x 16 pixels along the horizontal axis the number of blocks along the vertical axis whose motion vector is non-zero. As shown in Figure 2b this gives relatively small numbers for the shoulders and relatively large numbers for the head. There is a discontinuity when the edge of the head is reached and detection of this discontinuity enables location of the edge of the head in the horizontal direction. Thus if moving from left to right across the image the first discontinuity will identify the right hand side of the face (assuming the subject is facing the camera).

Similarly the left hand side of the face can be located by detecting a discontinuity when moving from right to left across the image. Thus as shown in Figure 2b there is a jump of five blocks vertically between horizontal positions five and six from the left hand side and a jump of four blocks vertically between horizontal positions three and four from the right hand side. A rectangle is then drawn around the head taking in this example five blocks vertically by four blocks horizontally. The segmented areas shown in Figure 3 are then examined and those which have at least 50% of their area included within the rectangle are deemed to be part of the head and the information relating to those areas is defined as the head set. Having located the head in the picture this information is passed to the head tracker 18.

The purpose of the head tracker 18 is to track the movement of the head of the human silhouette in videophone sequences (where the typical silhouette is the head and shoulders of the speaker), so that the resolution of the head area can be enhanced with respect to the rest of the image, especially in sequences with considerable motion where, because of the nature of the H. 261 specifications, the quality of the image deteriorates. The input to the head tracker is a sequence of pairs of frames consisting of motion vectors (which correspond to individual blocks of the image), one frame for vectors in the horizontal direction and another for vectors in the vertical direction. The output is a rectangle covering the head of the human silhouette in the sequence.

The principal features of the system are as follows: (1) the optical flow field formed by the backward looking motion vectors of each frame is segmented into areas of uniform motion; (2) an initial "good guess" of the head is obtained comprising a set of areas each having uniform motion; at each succeeding frame the areas belonging to the head are found, and those areas are called a head set; (3) the centroid of the initial 'good guess' of the head is tracked along the sequence of frames, using the estimated forward motion of the head set in each frame; (4) the centroid of the head set of each frame is not the one that is kept but the one that was tracked is retained; (5) the head set that is obtained at every stage is used only to give information about the size and the motion characteristics of the head and not about its location.

In brief, the head tracker takes the centroid of the previous head, i.e. the head in the previous frame, and then, using its forward motion vector, projects it onto the present frame. When it processes the present frame, it isolates those areas of the silhouette which are similar to the previous head and which when taken together produce a centroid which is as close as possible to the projected one. In essence it grows the head set around the projected centroid. It then calculates the size of the head set, which drives the creation of a rectangle around the head, and the composite backward motion vector of the head which will be used in the restart operations described hereinafter.

Every frame from the original image sequence is segmented into blocks (16x16 pixels) and for each block one horizontal and one vertical motion vector are calculated. The backward motion vectors are calculated by the motion estimator 4 in known manner. The forward motion vectors produced by the additional motion estimator 19 are used together with the backward motion vectors produced by the motion estimator 4 already available in the codec in the head tracker 18. The motion vectors produced by motion estimator 4 are computed by projecting the current frame back onto the previous frame and are used in the head tracker 18 to segment the image into areas of uniform motion. The forward looking motion vectors, which are produced by reversing the backward motion vectors produced by the motion estimator 4 and assigning them to the appropriate blocks in the previous frame, are used to project the centroid of the head from the previous frame onto the current frame. The input to the head tracker 18 comprises both the forward and backward motion vectors. Since we get separate motion vectors in the x (vertical) and in the y (horizontal) direction, the first step is to combine the separate motion vectors for each block into one, which is then characterised by its magnitude and angle with respect to the positive y axis. For example a motion vector with magnitude 3.2 pixels and angle 287 degrees might be obtained.

The next step is to group those backward motion vectors (each one corresponding to a single block) into areas of similar motion, according to the following principle. Motion vectors for two adjacent blocks are examined, if the differences of their magnitudes and angles are within certain thresholds (which can be preset or which may be set by the user at the start) then those two motion vectors are deemed to belong to the same area. The procedure which performs this task is recursive and the result is that there is only one segmentation as an output, irrespective of the starting point of the process. In this manner, if there is a sequence of adjacent motion vectors which comply with the above criterion, they will be grouped into a single area. Therefore, if a solid bar which is being rotated around one of its end points is taken as an example, the segmentation will give one area for the whole bar (provided that the motion difference of adjacent blocks is within the predetermined thresholds). This is different from the conventional method of segmentation where the motion vector of one block is compared to the composite motion vector of the area of which it is a candidate member. In the conventional method a solid bar rotated about one end may well be segmented into several areas due to the very different motion of the two ends.

Once one area has been found two further adjacent blocks, which do not form part of that area, are examined and a further area of uniform motion is constructed in the same manner. The whole process is repeated until all blocks in the picture frame have been allocated to an area.

For each area of the previous segmentation, the centroid (the coordinates denote blocks and not pixels), the motion, and the size are determined, and its adjacent areas in the frame are found. All this information is used in the next stage of the head location process.

Each area in the current frame is then compared with each area in the previous frame. Areas are compared with respect to their motion, size and distance between their centroids and, a similarity measure is determined from this information which is a single real number. The larger the number the more dissimilar the areas. Each one of the aforementioned factors does not make an equal contribution to the similarity measure. In the embodiment described the formula for determining the similarity measure between two areas is:

$$similarity=(mmd + mad + 12 \times cd + 2 \times sd)/8$$

where

mmd is the motion magnitude difference,
mad is the motion angle difference,
cd is the centroid difference, and
sd is the size difference.

Using the above similarity formula, the larger the magnitude of the similarity measure the greater the degree of dissimilarity. Each one of the above differences is divided by the maximum corresponding difference that can be encountered (or has been detected in the sequences processed); the reason for this being that it is more convenient to deal with small numbers. The relative weight of each one of the factors in the above formula has been determined purely empirically. It does appear theoretically that the distance between the centroids should contribute more to the dissimilarity than the difference in size, which in turn, should contribute more than the differences in motion magnitude and angle. The system is more tolerant to differences in motion than to changes in size and displacement.

For the subsequent steps it is necessary to know whether one area in the current frame is similar to an area in the previous frame, so the threshold of similarity has to be defined. Only areas with degree of similarity below the predetermined threshold are considered similar. A method for the automatic determination of the thresholds, using the gradient of the similarity function, in order to determine a discontinuity is used in this embodiment. In particular, for each area of the current frame, the similarity measures to all the areas of the previous frame are arranged in ascending order, using a bubble-sorting algorithm, and a discrete function s(n) is obtained; where n represents the place of each area in the ascending order and s(n) is the corresponding degree of similarity. For example suppose that for area 8 of the current frame:
n=1,a=5,s(1)=3.2/n=2,a=17,s(2)=5.7/...

where "a" represents areas of the previous frame. Area number 5 of the previous frame is first in the order with degree of similarity equal to 3.2, area number 17 is second with degree of similarity equal to 5.7 and ......

The gradient of the function s(n) is then found using the gradient approximation formula:

$$d^2s(n)/dn^2=[s(n+dn)-2*s(n)+s(n-dn)]/(dn)^2$$

where dn is set to 3. If a change from a negative to a positive gradient (or vice versa) is detected between values i and i+1 of n then a degree of similarity corresponding to area i is the threshold for the particular area of the current frame that is being examined. Therefore, for each area of the current frame a threshold is obtained. The mean value of all these thresholds is then calculated and this is the overall threshold for the current pair of previous and current frames (which would probably be different for the next such pair). If no threshold is detected the system uses a preset value.

Areas with degrees of similarity within the threshold are not automatically declared similar. In order for that to happen the distance between their centroids must be within a certain predetermined limit (increased by a factor which takes into account the size of the two areas).

Once the initial head is available, that is the rectangle found from the head and shoulders silhouette as described hereinbefore, the system can start computing the head set for the present frame. The first step is to find the forward motion vector corresponding to the head set in the previous frame (which, initially is the "good guess") and project the centroid of the previous head onto the present frame at a position dictated by the forward motion vector. For example, if the centroid of the head in the previous frame is x=5,y=12 (remember that these numbers correspond to blocks) and the motion vectors says that it will move by 10 pixels in the direction of 180 degrees, the projected centroid in the present frame is x=5,y=11 (note that one block is 16x16 pixels). In the first iteration, the initial centroid of the head is the centroid of the "good guess". From then on it is projected onto the following frame and that projection is the centroid of the head, for that frame. That centroid is projected again onto the next frame and the process continues until terminated.

After the centroid is projected from the previous to the present frame, as already described, it is necessary to build the new head around this centroid. There are three operations to be performed at this stage and they will be described one after the other.

Since the centroid of the new head and the centroids of all the moving areas in the image are known the first step is to start discarding areas (as not belonging to the head set) if their contribution to the centroid of the new head set brings it further away from the previously projected one rather than closer. The centroid of the whole silhouette is calculated and then each area is checked one by one. The area under consideration is first checked to determine its similarity with an area of the previous head and can only be included in the new head set if it is found to be similar to the previous head, i.e. if it was similar to an area of the previous head set. If the area meets this criterion then it is temporarily neglected and the new centroid of the whole silhouette is calculated (minus that area). If the new centroid is brought closer to the preprojected one, then this area is deemed not to belong to the head set (because its omission brought the remainder closer to the desirable centroid). If this does not happen then the new area is included in the headset. If the area is discarded the centroid of the remaining areas is the one that serves as a comparison point when the next area is checked. In this manner all areas are checked and a collection of areas that belong to the head set is found. The order in which the areas are checked is from the more remote ones with respect to the preprojected centroid, to the closest ones. Hence a bubble-sorting algorithm is employed in order to arrange the areas in ascending order of their distance.

At the end of the first step a head set whose centroid is very close to the desirable one is available. A problem, however, is that, sometimes, only areas that surround the preprojected centroid are found, forming something like the perimeter of a rectangle, and the areas that are inside the perimeter of the rectangle are not included. The centroid is still very close to the projected one but the inside areas are missing. Thus the system is arranged to fill in this perimeter and include all the areas that are inside it in the head set, provided, again, that they are similar to the previous head. In order to do this the distances of the furthest points of the current head set from the preprojected centroid in the horizontal and vertical directions are calculated. The mean values of these distances in the horizontal and vertical directions are taken and a rectangle is effectively drawn around the centroid which has its side equal to twice the previous mean value (i.e. the distance of the centroid from each side of the rectangle is equal to the mean value). All the areas which are included within that rectangle by at least 50% of their size and are similar to the previous head are included in the head set.

The third step addresses the problem of the case where an empty head set is found i.e. no areas of the head set were found by the previous procedure. In this case the system has to restart the whole operation and, in order to do so it goes back to the last frame in which there was a head set that had been created. It then it finds the area in the current frame with maximum overlap with the last detected head set and this is the initial new head set. This head set is further increased by all the areas of the current frame that give an overall overlapping with the last detected head set which is within certain limits with respect to the overlap of the initially added area. This procedure is called **new head set 2.** If, however, this procedure fails, then the system finds those areas with degree of similarity with the previous head which is below a certain threshold. This procedure is called **new head set 1.** If, after all these efforts, no head set is detected, or if the area of the detected head set is very small (below a given threshold) the system transfers the information of the previous head, that is size and motion vector, onto the present frame, the implication being that, if no head set is found, then there is probably no head set there to be found because the head did not move at all.

When the current head set has been determined (and provided that it is not the empty set) its size and backward motion vector is calculated. The size information is employed to build a rectangle around the face, which will represent the final prediction about the face in the present frame and the backward motion vector is used in the restart operation described hereinbefore. This rectangle is built so that its centroid is the same as the centroid of the head that has already been calculated using the forward motion vectors to project the centroid onto the present frame. The area of the rectangle is nominally equal to the area of the head. However, size normalisation may be carried out in order to address the problem where, when very few areas belong to the head set, the corresponding area of the head is very small (probably because the head moved very little and, consequently, there are few motion vectors corresponding to it). The normalisation procedure is as follows: the area of the current head is compared with the area of the previous head and if the current area is smaller than the previous one, the final current area is taken as a figure which is the current area plus 90% of the difference between the current area and the previous one. In this way the head is allowed to shrink (because, for example, the person is moving away from the camera) but not too much (which may have occurred if we detected very few areas for the current head set). This is the final prediction of the head.

The following points should be noted with regard to this specific implementation of a face tracking method:

1. The calculation of the centroid of the head is not affected by the centroid of the head set found in each frame. After starting with a first "good guess" of the head set and computing the centroid and motion vector for that initial head set, the motion vector is used to project the centroid onto the next frame. The new position is then projected again by the new motion vector and this procedure is repeated until the end of the sequence. The centroid of the head set constructed in all the frames apart from the first one (i.e. the one corresponding to the "good guess") is not involved in this process.

2. The head set found at each stage is used only to determine the motion vector and the size of the head. The motion vector is then used to project the centroid onto the next frame and the size is used for the creation of the final rectangle.

3. The separation of the calculation of the centroid from the calculation of the size and motion of the head gives the system the robustness that is needed in the face location system. Even if a wrong area is incorporated into the head set (since this will not radically change the correct motion vector otherwise that area would not have been incorporated) the system has the ability to recover and not shift the centroid of the head in the wrong direction.

4. There are two kinds of motion vectors used in the whole process. The backward motion vectors (which define where each block in the present frame came from in the previous frame) used in segmentation, similarity measurement, and head restart operations, and the forward motion vectors (which define where each block in the previous frame will move to in the present frame) used in the projection of the centroid of the previous head onto the present frame.

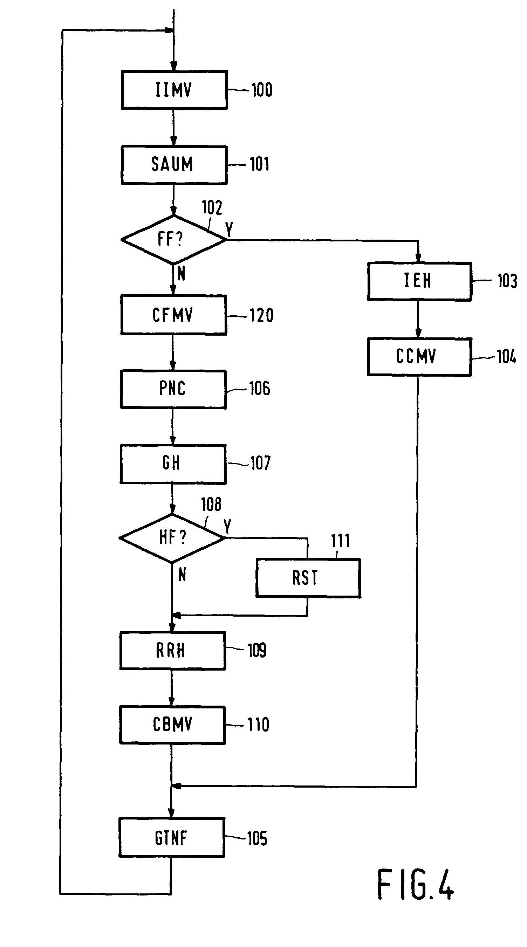

Figure 4 is a flow diagram illustrating a method of tracking an object according to the invention and is particularly applied to the tracking of faces with application in videophones. Block 100 (IIMV) represents the process of inputting an image and motion vectors into a store.

Figure 2 shows an example of motion vectors superimposed on a head and shoulders image, the head and shoulders being the object which is to be tracked. The motion vectors are derived for 16 x 16 pixel blocks. The input image is then segmented into areas having uniform motion as represented by box 101 (SAUM).

Figure 3 shows the segmentation of the head and shoulders object of Figure 2. A decision, Box 102 (FF?), is then taken as to whether or not this is the first frame of the sequence. If it is, then it is necessary to make an initial estimate of the head and shoulders position as previously explained and this process is represented by box 103 (IEH). Having obtained the initial estimate of the head position, its centroid and backward motion vector are calculated as represented by box 104 (CCMV). Box 105 (GTNF) represents the step of going to the next frame. If the decision represented by Box 102 (FF?) is that this is not the initial frame, then the forward motion vector of the head in the previous frame is calculated box 120 (CFMV) and used to project the centroid of the head in the previous frame onto the new frame as represented in box 106 (PNC). Having projected the new centroid onto the present picture frame the segmented areas of the present frame are compared with those of the previous frame. Where they are similar to those of the previous frame and when taken together produce a centroid which is within a given distance from the projected new centroid they are incorporated into the new head to grow an object around the centroid as represented by box 107 (GH). The object grown around the centroid by taking areas of uniform motion gives the total area of the head. A check is then made, box 108 (HF?),

to see whether in fact a head has been found around the projected centroid. If such a head has been found then a rectangle is formed around the head to include the perimeter of the head asrepresented in box 109 (RRH). The composite backward motion vector of the area within the rectangle is then calculated as represented by box 110 (CBMV) and is used to project the centroid onto the next frame.

If the decision in box 108 (HF?) is that a head has not been found in the present frame then a restart procedure is undertaken as represented by box 111 (RST). There are several different procedures in the restart operation. In the first case the system goes back to the last frame in which a head was found and it finds which of the segmented areas in the current frame has a maximum overlap with the last detected head and this is the initial new head. This head is further increased by all the areas in the current frame which overlap with areas of the previous headset to a degree dependent on the extent of the overlap of the initially added area. If this fails then the system finds those areas with a degree of similarity to the previous head which is below a certain threshold. The backward motion vector of the head as produced by the process represented by Box 110 (CBMV) is used, to perform this function. If after all those efforts no head is detected or if the area of the detected head is very small (below a given threshold) the system transfers the information of the previous head onto the present frame. The assumption is that if no head is found then there are probably no head areas there to be found, because the head did not move at all. It should be noted that if there is no movement in the scene then the total picture will form only one area since all motion vectors are zero.

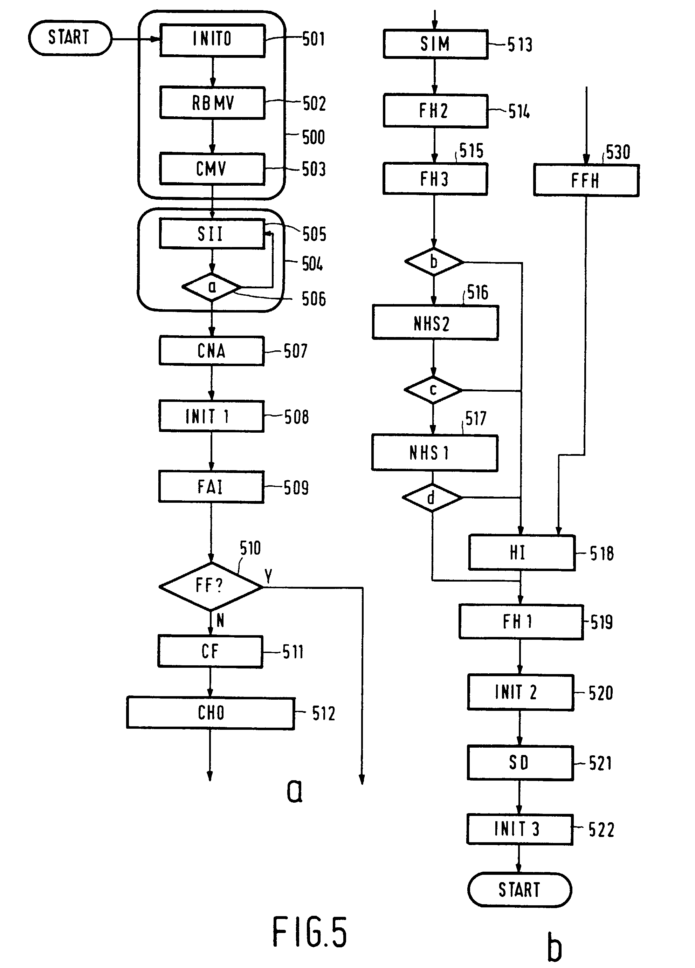

Figure 5 is a further flow diagram illustrating in more detail a method of tracking an object according to the invention. In order to carry out the process shown in Figure 5 it is necessary to have a data processor and a memory array. The most important data structures that the system employs are:

a) two fixed size arrays for the input motion vectors, **(x motion 2, y motion 2)**,

b) one fixed size array storing for each block the combined motion vector, **(comb motion 2),**

c) one fixed size array storing for each block the corresponding area number that results after the segmentation, **(xy area number 2),**

d) two variable size arrays of records, one for the previous frame and one for the present frame, for the description of the areas that the segmentation yields, **(frame 1, frame 2),**

e) one variable size array for the comparison results of each area of the current frame with each area of the previous frame, **(compare arr),**

f) one variable size array for the comparison results of each area of the current frame with the previous head, **(comp head),**

g) one set for all the areas that belong to the head of the current frame **(headset 2)** and one set for the head of the last frame where a head was detected, **(headset 1),**

h) one record recording the characteristics (motion, size, centroid) of **headset 2,** (head rec 2), as well as one recording the characteristics of **headset 1,** (head rec 1). **Headset 2** is the set of head areas in the present frame and **headset 1** is the set of head areas in the frame in which such a set was last detected.

As shown in Figure 5 the first stage 500 is to initialise the memory array conditions and to read in data regarding the first two frames. The initial step 501 (INIT0) is to initialise arrays **x motion 2, y motion 2,** and **comb motion 2** by setting each element in the arrays to zero. The next stage box 502 (RBMV) is to read input backward motion vectors in the horizontal and vertical directions and to assign the values to the corresponding elements of the arrays **x motion 2** and **y motion 2.** The third stage box 503 (CMV) is to compute for each block of pixels the combined motion vector giving its magnitude and angle. This requires the input of values for **x motion 2** and **y motion 2** in order to calculate the combined motion vector which is then stored in the array **comb motion 2.** Box 504 represents segmentation of the input image. The segmentation is carried out on the basis of segmenting the image into areas of uniform motion. Box 505 (SII) represents the operation of comparing each block of pixels with each of its neighbours and if the difference between the corresponding magnitude and angle of the backward motion vectors of the two blocks is within a certain threshold then those two blocks are assigned to same area. The whole operation is then repeated recursively for each of the neighbouring blocks that meet the previous test. This is indicated by the decision point A (box 506). The input to box 504 is taken from the array **comb motion 2** and the output produced is stored in the array **xy area 2.** Box 507 (CNA) represents the step of counting the number of areas that result from the segmentation. This is used to create the array **frame 2** and defines the size of the array. Box 508 (INIT1) represents the assignment of the appropriate initial values to the components of each of the records that represents the elements of the array **frame 2.** For each area resulting from the current segmentation the motion, the size, and the centroid is found, box 509 (FAI). In order to achieve this the inputs **x motion 2, y motion 2, xy area 2** are used and the output produced is stored in array **frame 2.** Provided that this is not the first frame in the sequence, determined as represented by Box 510 (FF?), then each area of the current frame is compared, box 511 (CF), with each area of the previous frame with respect to motion magnitude, motion angle, size and position of the centroid and the overall degree of similarity for the two areas is computed and stored in the array, **comp arr.**

The similarity threshold for the current frame is found by locating a discontinuity in the sequence of similarity measures after having arranged them in ascending order using bubble sorting. It is then determined whether two areas, one from the current frame and one from the previous frame are similar by comparing their degree of similarity with the similarity threshold. This uses inputs from arrays **frame 1** and **frame 2** and causes the result to be stored in **compare arr.** The next stage, box 512 (CHD), involves the computation of the similarity measure of each area in the current frame with respect to the head of the previous frame and the determination of whether that area is similar to the previous head. The similarity measure is stored in the array, **compare head.** The next stage, represented by box 513 (SIM), is to determine for each area of the current frame whether it is similar to an area that belongs to the headset of the previous frame. If it is then that area of the current frame is declared similar to the previous head and this information is stored in the corresponding record of **frame 2.** The next stage, represented by box 514 (FH2), comprises the process of locating the areas that belong to the head of the present frame. This is achieved by projecting the centroid of the head in the previous frame onto the present frame using the forward motion vectors of the previous frame and finding the **headset 2** comprising a set of areas that give a centroid for **headset 2** that is close to the projected centroid. In addition to being close to the projected centroid those areas have to be similar to the previous head as determined by the procedure similar, box 513 (SIM). This procedure uses the inputs x and y (the coordinates of the centroid of the head as projected from the previous frame onto the present frame using the forward motion vector of the previous head) and the records from array **frame 2** and produces an output which is stored as **headset 2.** The next step represented by box 515 (FH3) is a procedure to fill in the **headset 2.** This procedure is necessary because it is possible that areas of the **headset 2** that are determined by the procedure find head 2, Box 514 (FH2), take the form of substantially the perimeter of a rectangle with the inside areas ignored (this perimeter does actually have the desirable centroid). The process find head 3 causes all the areas inside the perimeter of **headset 2** that are similar to areas of the previous head to be also included in **headset 2.** If no **headset 2** is found, decision point b, then the system restarts, box 516 (NHS2), by taking as **headset 2** all the areas which give a maximum overlap with **headset 1.** This process is called new headset 2. If this fails, decision point c, that is new headset 2 is an empty set, then the system finds those areas with a degree of similarity with the previous head which is below a certain threshold, box 517 (NHS1). If **headset 2** is still not found the previous **head rec 1** is transferred onto the current frame in **head rec 2** it being assumed that the head has not moved and that this was the reason for **headset 2** not being found. Assuming that a head set has been found, decision point d, then a process is now carried out which entails finding the motion vector, the size, and the centroid of **headset 2,** box 518 (HI). The inputs used for this calculation are **x motion 2, y motion 2, xy area 2** and the output produced is stored in record **head rec 2.** The next process, box 519 (FH1), entails the building of a rectangle around the centroid of head having a size that is determined by the size **head rec 2** normalised according to the size of **head rec 1.** Thus at this stage the head has been tracked from the previous frame to the present frame and a rectangle has been drawn around the head so that this can be fed to the quantiser to control the quantisation levels.

In order to prepare for the inputting of a further frame an initialise step, box 520 (INIT2), is carried out which initialises the arrays **compare array** and **frame 1.** The next process, box 521 (SD) is to shift all the relevant data from the present frame, that is **frame 2,** into **frame 1** to prepare for the processing of the next frame. The next step, Box 522 (INIT3), is to initialise all components of the record **head rec 2.** The process then restarts with the initialisation process of box 501.

For the initial frame as determined by Box 510 the process find first head, Box 530 (FFH), is carried out. The initial head is found as described hereinbefore and the information regarding the motion vectors and sizes of the areas making up the initial head is used in the process head info, Box 518 (HI).

Various modifications may be made to the embodiments described. For example the restart procedures described could be replaced by going to the initial head location process each time an empty headset is found. Further a limit to the number of restart procedures could be set where it is assumed that if no headset is found for a given number of frames the object has been lost to the tracking system. The method has been described with reference to the tracking of a head in a picture to be transmitted over a videophone link but it is equally applicable to any system where picture data is to be transmitted over a limited capacity data link or is to be stored in a limited capacity store and to other objects which may be of interest in a given environment. An example of such a system is compact disc interactive (CD-I) and other systems where data representing pictures containing motion are stored on optical discs where the storage capacity as well as the speed of reading the stored data is limited. In such systems the initial location of the object may be carried out manually by the author of the disc for each sequence of picture frames since the coding operation will not normally be carried out in real-time. Whilst in the embodiments described backward motion vectors are used for the segmentation, similarity measurement, and head restart operations and forward motion vectors are used to project the object centroid from one frame to the next it is not essential to the inventive concept that the motion vectors should be used in this manner although it is presently believed that this gives the best overall performance. In the H.261 codec backward motion vectors are readily available as they are used for other functions within the codec but if they were not available it would be possible to use forward motion vectors for segmentation, similarity measurement, and head restart operations in the head tracker with appropriate modification to the timing of various processes.

From reading the present disclosure, other modifications will be apparent to persons skilled in the art. Such modifications may involve other features which are already known in the design, manufacture and use of object tracking systems and component parts thereof and which may be used instead of or in addition to features already described herein.

## Claims

1. A method of tracking an object in a scene represented as a sequence of picture frames captured by a camera for display on a display device, the method comprising the steps of:

   a) segmenting the image in an initial frame into areas having uniform motion,
   b) locating the object in the initial frame and finding its centroid and motion vector,
   c) projecting the centroid of the object onto the next frame using the motion vector to define a new position of the object centroid,
   d) segmenting the image in the next frame into a number of areas having uniform motion,
   e) finding those areas of the image similar to areas of the object in the previous frame and which together produce a centroid close to the projected centroid to produce a new object,
   f) calculating the size and motion vector of the new object,
   g) projecting the new position of the object centroid onto the succeeding frame using the motion vector of the new object, and
   h) repeating steps d) to g).

2. A method as claimed in Claim 1 in which in step c) and step f) a forward motion vector is calculated.

3. A method as claimed in Claim 1 or Claim 2 in which backward motion vectors are used to segment the images.

4. A method as claimed in any preceding claim in which in step e) the factors determining similarity are the size, position, and magnitude and direction of motion of the areas to be compared.

5. A method as claimed in any preceding claim wherein the object is a human head.

6. A method as claimed in Claim 5 including the step of constructing a rectangle around the head.

7. A method as claimed in any preceding claim in which the segmenting steps comprise the steps of

> i) comparing motion vectors of two adjacent blocks of pixels,
> ii) assigning the blocks of pixels to the same area if the difference between their motion vectors is within a given threshold,
> iii) repeating steps i) and ii) for each block of pixels adjacent to a block of pixels within the area until all adjacent blocks of pixels have been examined and no further blocks of pixels are incorporated into the area,
> iv) selecting two further adjacent blocks which are not included within the area and repeating steps i) to iii) to create a further area of uniform motion, and
> v) repeating step iv) until all blocks within the picture frame are allocated to an area.

8. Apparatus for tracking an object in a scene represented as a sequence of picture frames captured by a camera for display on a display device, the apparatus comprising means for segmenting the image in an initial frame into areas having uniform motion, means for locating the object in the initial frame and finding its centroid and motion vector, means for projecting the centroid of the object onto the next frame using the motion vector to define a new position of the object centroid, means for segmenting the image in the next frame into a number of areas having uniform motion, means for finding those areas of the image similar to areas of the previous frame and having a centroid close to the projected centroid to produce a new object, means for calculating the size and motion vector of the new object, and means for projecting the new position of the object centroid onto the succeeding frame using the motion vector of the new object.

9. Apparatus as claimed in Claim 8 in which the segmenting means use the backward motion vectors of the pixel blocks.

10. Apparatus as claimed in Claim 8 or Claim 9 in which the projecting means uses the forward motion vector of the object.

11. Apparatus as claimed in any of Claims 8 to 10 in which similarity of areas is determined by taking into account the relative size, position, and magnitude and direction of motion of the areas being compared.

12. Apparatus as claimed in any of Claims 8 to 11 in which the object is a human head.

13. Apparatus as claimed in Claim 12 comprising means for constructing a rectangle around the head.

14. Apparatus as claimed in any of Claims 8 to 13 in which the segmenting means comprises means for comparing motion vectors of two adjacent blocks of pixels, means for assigning the blocks of pixels to the same area if the difference between their motion vectors is less than a given threshold, means for recursively considering all blocks of pixels adjacent to blocks of pixels within the same area until all adjacent blocks of pixels have been examined and no further blocks have been incorporated into the area.

15. A videophone terminal comprising a camera, a display unit and a codec wherein the codec is arranged to transmit picture information over a communication link of a given bandwidth and includes means for quantising different areas of each picture frame at a different resolution wherein object tracking apparatus as claimed in any of Claims 8 to 14 is arranged to control the codec such that the area of the picture frame containing the tracked object is transmitted at a higher resolution than the rest of the picture frame.

**Patentansprüche**

1. Verfahren zur Verfolgung eines Objektes in einer Szene, dargestellt als Folge von Bildern, eingefangen von einer Kamera zur Wiedergabe an einer Wiedergabeanordnung, wobei dieses Verfahren die nachfolgenden Verfahrensschritte aufweist:

> a) Segmentierung des Bildes in einem Ausgangsrahmen in Gebiete mit einer einheitlichen Bewegung,
> b) Ortung des Objektes in dem Ausgangsrahmen und Ermittlung des Flächenmittelpunktes und des Bewegungsvektors,
> c) Projizierung des Flächenmittelpunktes auf den nächsten Rahmen unter Verwendung des Bewegungsvektors zum Definieren einer neuen Position des Flächenmittelpunktes des Objektes,
> d) Segmentierung des Bildes in dem nächsten Rahmen in eine Anzahl Gebiete mit einheitlicher Bewegung,
> e) das Finden derjenigen Gebiete des Bildes, die denen des Objektes in dem vorhergehenden Rahmen entsprechen und die zusammen einen Flächenmittelpunkt erzeugen nahe bei dem projizierten Flächenmittelpunkt zum Erzeugen eines neuen Objektes,

f) das Berechnen der Größe und des Bewegungsvektors des neuen Objektes,

g) das Projizieren der neuen Position des Flächenmittelpunktes des Objektes auf den nachfolgenden Rahmen unter Verwendung des Bewegungsvektors des neuen Objektes, und

h) die Wiederholung der Schritte d) bis g).

2. Verfahren nach Anspruch 1, wobei in dem Schritt c) und Schritt f) ein Vorwärtsbewegungsvektor berechnet wird.

3. Verfahren nach Anspruch 1 oder 2, wobei zur Segmentierung der Bilder Rückwärtsbewegungsvektoren verwendet werden.

4. Verfahren nach einem der vorstehenden Ansprüche, wobei in dem Schritt e) die faktoren, welche die Gleichheit bestimmen, die Größe, die Position und die Größe und Richtung der Bewegung der zu vergleichenden Gebiete sind.

5. Verfahren nach einem der vorstehenden Ansprüche, wobei das Objekt ein menschlicher Kopf ist.

6. Verfahren nach Anspruch 5 mit dem Verfahrensschritt zur Konstruktion eines Rechtecks um den Kopf.

7. Verfahren nach einem der vorstehenden Ansprüche, wobei die Segmentierungsschritte die nachfolgenden Schritte sind:

i) das Vergleichen von Bewegungsvektoren zweier benachbarter Blöcke von Pixeln,
ii) das Zuordnen der Blöcke von Pixeln zu demselben Gebiet, wenn die Differenz zwischen den Bewegungsvektoren innerhalb einer bestimmten Schwelle liegt,
iii) das Wiederholen der Verfahrensschritte i) und ii) für jeden Block von Pixeln grenzend an einen Block von Pixeln innerhalb des Bereichs, bis alle benachnarten Blöcke von Pixeln untersucht worden sind und keine weiteren Blöcke von Pixeln in dem Gebiet einverleibt sind,
iv) das Selektieren zweier weiteren benachbarten Blöcke, die nicht in dem Gebiet liegen und das Wiederholen der Schritte i) bis iii) zum Erzeugen eines weiteren Gebietes einheitlicher Bewegung, und
v) das Wiederholen des Schrittes iv) bis alle Blöcke innerhalb des Bildrahmens einem Gebiet zugeordnet sind.

8. Anordnung zur Verfolgung eines Objektes in einer Szene, dargestellt als Folge von Bilderrahmen eingefangen von einer Kamera zur Wiedergabe an einer Wiedergabeanordnung, wobei die Anordnung Mittel aufweist zum Segmentieren des Bildes in einem Ausgangsrahmen in Gebiete einheitlicher Bewegung, Mittel zum Orten des Objektes in dem Ausgangsrahmen und zum Auffinden des Flächenmittelpunktes und des Bewegungsvektors, Mittel zum Projizieren des Flächenmittelpunktes des Objektes auf den nächsten Rahmen unter Verwendung des Bewegungsvektors zum Definieren einer neuen Position des Flächenmittelpunktes des Objektes, Mittel zum Segmentieren des Bildes in dem nächsten Rahmen in eine Anzahl Gebiete einheitlicher Bewegung, Mittel zum Herausfinden derjenigen Gebiete des Bildes, die denen des vorhergehenden Rahmens entsprechen und mit einem Flächenmittelpunkt nahe bei dem projizierten Flächenmittelpunkt zum Erzeugen eines neuen Objektes, Mittel zum Berechnen der Größe und des Bewegungsvektors des neuen Objektes, und Mittel zum Projizieren der neuen Position des Flächenmittelpunktes des Objektes auf den nachfolgenden Rahmen unter Verwendung des Bewegungsvektors des neuen Objektes.

9. Anordnung nach Anspurch 8, wobei die Segmentierungsmittel die Rückwärtsbewegungsvektoren der Pixelblöcke verwendet werden.

10. Anordnung nach Anspruch 8 oder 9, wobei die Projektionsmittel den Vorwärtsbewegungsvektor des Objektes benutzen.

11. Anordnung nach einem der Ansprüche 8 bis 10, wobei die Gleichheit der Gebiete durch Berücksichtigung der relativen Größe, Position und Gröbe und Richtung der Bewegung der verglichenen Gebiete bestimmt wird.

12. Anordnung nach einem der Ansprüche 8 bis 11, wobei das Objekt ein menschlicher Kopf ist.

13. Anordnung nach Anspruch 12 mit Mitteln zum Konstruieren eines rechtecks um den Kopf.

14. Anordnung nach einem der Ansprüche 8 bis 13, wobei die Segmentierungsmittel Mittel enthalten zum Vergleichen von Bewegungsvektoren zweier benachbarter Blöcke von Pixeln, Mittel zum Zuordnen der Blöcke von Pixeln zu demselben Gebiet, wenn die Differenz zwischen deren Bewegungsvektoren kleiner ist als eine bestimmte Schwelle, Mittel zur rekursiven Betrachtung aller Blöcke von Pixeln grenzend an Blöcke von Pixeln innerhalb desselben Gebietes, bis alle benachbarten Blöcke von Pixeln untersucht worden sind und keine weiteren Blöcke in das Gebiet einverleibt worden sind.

15. Videophonterminal mit einer Kamera, einer Wiedergabeeinheit und einem Codec, wobei der Codec zum Übertragen von Bildinformation über eine Kommunikationsverbindung einer bestimmten Bandbreite vorgesehen ist und mit Mitteln zum Quantisieren verschiedener Gebiete jedes Bildes mit einer verschiedenen Auflösung, wobei eine Objektverfolgungsanordnung nach einem der Ansprüche 8 bis 14 vorgesehen ist zur Regelung des Codecs, derart, daß das Gebiet des Bildes mit dem verfolgten Objekt mit einer höheren Auflösung übertragen wird als der restliche Teil des Bildes.

## Revendications

1. Procédé de poursuite d'un objet dans une scène représentée par une séquence d'images saisies par une caméra en vue d'un affichage sur un dispositif d'affichage, le procédé comprenant les étapes visant à :

   a) segmenter l'image dans une image initiale en zones ayant un mouvement uniforme,
   b) localiser l'objet dans l'image initiale et trouver son centroïde ainsi que son vecteur de mouvement,
   c) projeter le centroide de l'objet sur l'image suivante au moyen du vecteur de mouvement pour définir une nouvelle position du centroïde de l'objet,
   d) segmenter l'image dans l'image suivante en un certain nombre de zones ayant un mouvement uniforme,
   e) trouver les zones de l'image similaires aux zones de l'objet dans l'image précédente et qui, ensemble,produisent un centroïde proche du centroïde projeté afin de produire un nouvel objet,
   f) calculer la taille et le vecteur de mouvement du nouvel objet,
   g) projeter la nouvelle position du centroïde de l'objet sur l'image successive au moyen du vecteur de mouvement du nouvel objet, et
   h) répéter les étapes d) à g).

2. Procédé suivant la revendication 1, dans lequel un vecteur de mouvement anticipé est calculé au cours de l'étape c) et de l'étape f).

3. Procédé suivant la revendication 1 ou 2, dans lequel des vecteurs de mouvement différés sont utilisés pour segmenter les images.

4. Procédé suivant l'une quelconque des revendications précédentes, dans lequel, au cours de l'étape e), les facteurs déterminant la similarité sont la taille, la position, ainsi que l'amplitude et la direction de mouvement des zones devant être comparées.

5. Procédé suivant l'une quelconque des revendications précédentes, dans lequel l'objet est une tête humaine.

6. Procédé suivant la revendication 5, comprenant l'étape de construction d'un rectangle autour de la tête.

7. Procédé suivant l'une quelconque des revendications précédentes, dans lequel les étapes de segmentation comprennent les étapes visant à :

   i) comparer les vecteurs de mouvement de deux blocs adjacents de pixels,
   ii) affecter les blocs de pixels à la même zone si la différence entre leurs vecteurs de mouvement est en deça d'une valeur de seuil donnée,
   iii) répéter les étapes i) et ii) pour chaque bloc de pixels adjacent à un bloc de pixels dans la zone jusqu'à ce que tous les blocs de pixels adjacents aient été examinés et que plus aucun bloc de pixels ne soit incorporé dans la zone,
   iv) sélectionner deux autres blocs adjacents qui ne sont pas compris dans la zone et répéter les étapes i) à iii) afin de créer une autre zone de mouvement uniforme, et
   v) répéter l'étape iv) jusqu'à ce que tous les blocs dans l'image soient affectés à une zone.

8. Appareil destiné à la poursuite d'un objet dans une scène représentée par une séquence d'images saisies par une caméra en vue d'un affichage sur un dispositif d'affichage, l'appareil comprenant des moyens pour segmenter l'image dans une image initiale en zones ayant un mouvement uniforme, des moyens pour localiser l'objet dans l'image initiale et trouver son centroïde ainsi que son vecteur de mouvement, des moyens pour projeter le centroide de l'objet sur l'image suivante au moyen du vecteur de mouvement afin de définir une nouvelle position du centroïde de l'objet, des moyens pour segmenter l'image dans l'image suivante en un certain nombre de zones ayant un mouvement uniforme, des moyens pour trouver les zones de l'image similaires à des zones de l'image précédente et ayant un centroïde proche du centroïde projeté afin de produire un nouvel objet, des moyens pour calculer la taille et le vecteur de mouvement du nouvel objet, et des moyens pour projeter la nouvelle position du centroïde de l'objet sur l'image successive au moyen du vecteur de mouvement du nouvel objet.

9. Appareil suivant la revendication 8, dans lequel les moyens de segmentation utilisent les vecteurs de mouvement différés des blocs de pixels.

10. Appareil suivant la revendication 8 ou 9, dans lequel les moyens de projection utilisent le vecteur de mouvement anticipé de l'objet.

11. Appareil suivant l'une quelconque des revendications 8 à 10, dans lequel la similarité des zones est déterminée en tenant compte de la taille relative, de la position relative, ainsi que de l'amplitude et de la direction de mouvement des zones comparées.

12. Appareil suivant l'une quelconque des revendications 8 à 10, dans lequel l'objet est une tête humaine.

13. Appareil suivant la revendication 12, comprenant des moyens pour construire un rectangle autour de la tête.

14. Appareil suivant l'une quelconque des revendications 8 à 13, dans lequel les moyens de segmentation comprennent des moyens pour comparer les vecteurs de mouvement de deux blocs adjacents de pixels, des moyens pour affecter les blocs de pixels à la même zone si la différence entre leurs vecteurs de mouvement est inférieure à une valeur de seuil donnée, des moyens pour considérer de manière récursive tous les blocs de pixels adjacents aux blocs de pixels dans la même zone jusqu'à ce que tous les blocs de pixels adjacents aient été examinés et que plus aucun bloc ne soit incorporé dans cette zone.

15. Terminal visiophonique comprenant une caméra, une unité d'affichage et un codec, dans lequel le codec est à même de transmettre des informations d'image sur une liaison de communication d'une largeur de bande donnée et comprend des moyens pour quantifier différentes zones de chaque image à une définition différente, dans lequel l'appareil de poursuite d'objet suivant l'une quelconque des revendications 8 à 14 est à même de commander le codec de telle sorte que la zone de l'image contenant l'objet poursuivi soit transmise avec une définition supérieure au reste de l'image.

EP 0 579 319 B1

FIG.1

16

FIG.2

FIG.3

17

FIG.4

18

FIG.5